**Europäisches Patentamt**

**European Patent Office**

**Office européen des brevets**

(19)

(11) Numéro de publication: **0 009 436**
**B1**

(12) **FASCICULE DE BREVET EUROPEEN**

(45) Date de publication du fascicule du brevet: **30.11.83**

(51) Int. Cl.³: **H 04 N 3/10**

(21) Numéro de dépôt: **79400629.6**

(22) Date de dépôt: **07.09.79**

(54) Dispositif acousto-électrique de traitement d'une image optique à deux dimensions.

(30) Priorité: **19.09.78 FR 7826817**

(43) Date de publication de la demande:
**02.04.80 Bulletin 80/7**

(45) Mention de la délivrance du brevet:
**30.11.83 Bulletin 83/48**

(84) Etats contractants désignés:
**DE GB NL**

(56) Documents cités:
**FR - A - 2 324 061**
**FR - A - 2 336 015**

(73) Titulaire: **THOMSON-CSF**
**173, Boulevard Haussmann**
**F-75379 Paris Cedex 08 (FR)**

(72) Inventeur: **Maerfeld, Charles**
**"THOMSON-CSF" - SCPI 173, bld Haussmann**
**F-75360 Paris Cedex 08 (FR)**
Inventeur: **Gautier, Hervé**
**"THOMSON-CSF" - SCPI 173, bld Haussmann**
**F-75360 Paris Cedex 08 (FR)**

(74) Mandataire: **Benoit, Monique et al,**
**THOMSON-CSF SCPI 173, Bld Haussmann**
**F-75379 Paris Cedex 08 (FR)**

Courier Press, Leamington Spa, England.

# 0 009 436

## Dispositif acousto-électrique de traitement d'une image optique à deux dimensions

L'invention a pour objet un dispositif qui réalise la lecture électrique ou le traitement d'une image optique à deux dimensions, à l'aide d'ondes acoustiques de surface.

La lecture d'images à l'aide d'ondes acoustiques, également appelées ondes élastiques, est réalisée le plus souvent par l'intermédiaire d'interactions non linéaires entre des champs électriques dans un semiconducteur, ces champs étant ceux qui sont associés aux déformations d'un cristal piézoélectrique sur lequel se propagent des ondes élastiques de surface. Le signal représentant l'interaction peut être par exemple le courant électrique qui résulte de cette interaction et qui parcourt le semiconducteur. Un type de structure utilisable est constitué d'une plaquette piézoélectrique et d'une plaquette semiconductrice placées en vis-à-vis, séparées par une mince couche d'air. L'image à lire est projetée sur le semiconducteur où, en modulant spatialement la conductivité de ce dernier et sa densité superficielle de charges, elle module l'intensité du signal résultant de l'interaction non linéaire.

On réalise ainsi directement la lecture d'une image à une seule dimension. Pour lire des images à deux dimensions, il est nécessaire d'adapter le système et différentes solutions sont connues à cet effet.

Il est possible par exemple d'utiliser deux ondes impulsionnelles, émises à la surface du milieu piézoélectrique dans deux directions normales; leur interaction fournit notamment un signal spatialement périodique et indépendant du temps, recueilli au niveau de la zone d'interaction à l'aide d'un capteur de même période que celle du signal produit; leur zone d'interaction se déplace sur une ligne et l'image est analysée ligne après ligne en faisant varier le retard relatif des deux ondes. Un tel système est décrit par exemple dans la demande de brevet français N° 75-29607 (N° de publication 2 326 094) au nom de Thomson-CSF. Ce système présente toute-fois l'inconvénient de nécessiter un capteur périodique: d'une part cela augmente la complexité, donc le coût, et d'autre part cela limite beaucoup les possibilités de traitement de signal, du fait que la période du signal de lecture, qui doit correspondre à celle du capteur, ne peut être modifiée.

Une autre solution consiste à ajouter au système précédent une troisième onde acoustique, se propageant dans une direction et avec une fréquence telles que le signal résultant de l'interaction soit spatialement uniforme, afin de pouvoir être recueilli par un capteur non périodique. Un tel système est décrit dans la demande de brevet français N° 75-39182 (N° de publication 2 336 015) au nom de Thomson-CSF. Sur le plan de la réalisation pratique, ce système présente toutefois un inconvénient lié au fait que les ondes acoustiques doivent se propager non plus dans deux mais dans trois directions distinctes: le matériau piézoélectrique doit en effet être tel que les ondes de surface se propagent convenablement dans trois directions, sand dispersion, et que le coefficient de couplage électromécanique soit élevé, ce qui restreint considérablement le choix de ce matériau.

En outre, toutes ces solutions ne permettent qu'une lecture directe de l'image point par point; dans le cas où on désire effectuer une transformation de l'image (transformation de Fourier par exemple), il est nécessaire de la réaliser après la lecture ellemême.

La présente invention a pour objet un dispositif permettant d'éviter ces inconvénients et d'obtenir directement une transformation d'une image à deux dimensions.

A cet effet, il est prévu selon l'invention un dispositif acoustoélectrique de traitement d'une image optique à deux dimensions, comportant un milieu piézoélectrique portant des transducteurs électromécaniques, susceptibles de transformer un signal électrique en ondes élastiques se propageant à la surface du milieu piézoélectrique et réciproquement, un milieu photosensible, recevant l'image optique selon une surface dite surface d'interation, ce milieu transformant les photons constituant l'image en charges électriques, des électrodes continues assurant la génération ou la réception d'une onde électromagnétique à travers un milieu électriquement non linéaire dans lequel l'amplitude des interactions non linéaires produites par les ondes élastiques se propageant à la surface du milieu piézoélectrique dépend de la concentration des charges électriques, ces interactions ainsi modulées fournissant le signal de sortie du dispositif, le milieu non linéaire étant couplé électriquement au milieu photosensible; le milieu piézoélectrique porte quatre transducteurs électromécaniques disposés deux à deux en vis-à-vis, suceptibles d'émettre des ondes dans seulement deux directions distinctes et avec des vecteurs d'ondes têls que le vecteur résultant de l'interaction non linéaire de trois des ondes soit égal et opposé au vecteur d'onde de la quatrième onde élastique; les quatre ondes émises sont des ondes longues, dont la durée est au moins égale au temps de balayage de la surface d'interaction par une onde élastique, chacune des ondes étant sinusoïdale de la forme $\exp \{j . \delta\omega_1 . t\} . \exp \{j . \omega_1 . t\}$ et $\exp \{j . \omega_1 . t\}$ dans l'une des directions et de la forme $\exp \{j . \delta\omega_2 . t\} . \exp \{j . \omega_2 . t\}$ et $\exp \{j . \omega_2 . t\}$ dans l'autre direction, linteraction de ces ondes fournissant un point de la transformée de Fourier bidimensionnelle de l'image, les autres points de la transformée étant fournis par la variation des pulsations $\delta\omega_1$ et $\delta\omega_2$.

Il est également prévu un dispositif acousto-électrique de traitement d'une image optique à deux dimensions, comportant un milieu piézoélectrique portant des transducteurs électromécaniques, susceptibles de transformer un signal électrique en ondes élastiques se propageant à la surface du milieu piézoélectrique et réciproquement, un milieu photosensible, recevant l'image optique selon une

## 0 009 436

surface dite surface d'interaction, ce milieu transformant les photons constituant l'image en charges électriques, des électrodes continues assurant la génération ou la réception d'une onde électromagnétique à travers un milieu électriquement non linéaire dans lequel l'amplitude des interactions non linéaires produites par les ondes élastiques se propageant à la surface du milieu piézoélectrique dépend de la concentration des charges électriques, ces interactions ainsi modulées fournissant le signal de sortie du dispositif, le milieu non linéaire étant couplé électriquement au milieu photosensible; le milieu piézoélectrique porte quatre transducteurs électromécaniques disposés deux à deux en vis-à-vis, susceptibles d'émettre des ondes dans seulement deux directions distinctes et avec des vecteurs d'ondes tels que le vecteur résultant de l'interaction non linéaire de trois des ondes soit égal et opposé au vecteur d'onde de la quatrième onde élastique; les quatre ondes émises sont des ondes longues, dont la durée est au moins égale au temps de balayage de la surface d'interaction par une onde élastique, chacune des ondes étant sinusoïdale de la forme $e^{j\alpha_1 t^2} . e^{j\omega_1 t}$ et $e^{-j\alpha'_1 t^2} . e^{j\omega_1 t}$ pour l'une des directions et de la forme $e^{j\alpha_2(t-\theta)^2} . e^{j\omega_2 t}$ et $e^{-j\alpha'_2(t-\theta)^2} . e^{j\omega_2 t}$ pour l'autre direction, $\alpha_1 . \alpha'_1$, $\alpha_2$ et $\alpha'_2$ étant des coefficients de proportionalité et $\theta$ un retard, l'interaction de ces ondes fournissant une ligne d'une transformée bidimensionnelle de l'image, les autres lignes de la transformée étant fournies par la variation du retard relatif des ondes émises dans la seconde direction.

D'autres objets, caractéristiques et résultats de l'invention ressortiront de la description suivante et des dessins annexés; où:

— la figure 1 représente un mode de réalisation du dispositif selon l'invention;

— la figure 2, a, b et c, représente des diagrammes explicatifs d'une autre mode de fonctionnement du dispositif selon l'invention.

Sur ces différentes figures, les mêmes références se rapportent aux mêmes éléments.

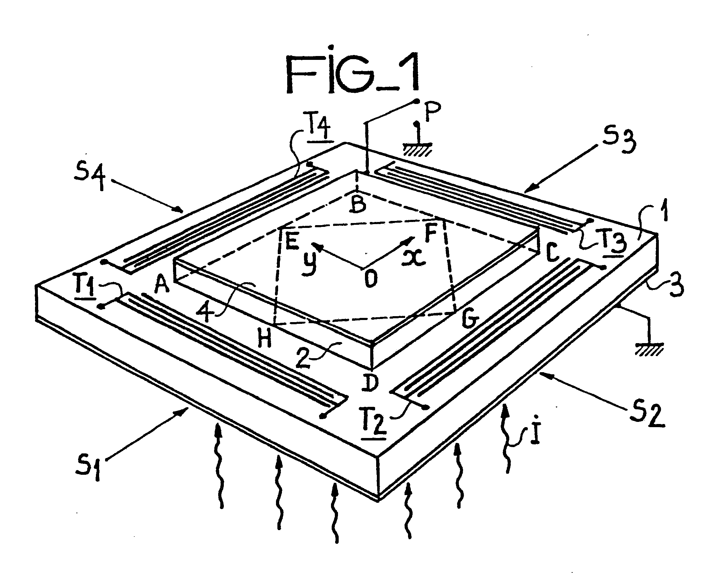

La figure 1 représente un mode de réalisation du dispositif selon l'invention. Il comporte:

— un substrat piézoélectrique 1, par exemple en forme de plaquette rectangulaire;

— quatre transducteurs électromécaniques, $T_1$, $T_2$, $T_3$ et $T_4$, capables d'émettre sur excitation électrique des ondes élastiques à la surface du substrat 1, et réciproquement, et ce dans deux directions distinctes Ox et Oy qui sont, dans l'exemple de la figure, perpendiculaires entre elles. Les transducteurs sont par exemple chacun constitués, classiquement, par deux électrodes en forme de peignes à dentes alternées, les ondes étant émises dans la direction normale aux dents des peignes. Sur la figure, les transducteurs $T_1$ et $T_3$ émettent des ondes respectivement selon $+ \vec{O}x$ et $- \vec{O}x$, et les transducteurs $T_2$ et $T_4$ selon $+ \vec{O}y$ et $- \vec{O}y$. La zone ABCD d'intersection des ondes élastiques émises est appelée surface d'interaction; si les transducteurs ont même longueur et sont placés deux à deux en vis-à-vis, c'est comme représenté sur la figure un carré dont le côté est la longueur des transducteurs;

— un milieu photosensible sur lequel est projetée l'image (I) à lire, transformant les photons incidents en charges électriques de surface ou de volume, par effet de photorésistance ou de photoconductivité par exemple;

— un milieu dit non-linéaire, dans lequel sont susceptibles de se reproduire des interactions non-linéaires entre les signaux appliqués au dispositif, interactions dont l'amplitude dépend de la concentration des charges électriques dans ce milieu. Ce milieu est de préférence semiconducteur et peut être avantageusement confondu avec le milieu photosensible précédente; il peut être par exemple en silicium. Ce milieu semiconducteur se présente, dans le mode de réalisation représenté sur la figure, sous forme d'une plaquette 2 placée en vis-à-vis du substrat piézoélectrique 1 du côté des transducteurs selon la surface d'interaction ABCD, et séparée de ce dernier par une mince couche d'air;

— des moyens de prélèvement des signaux électriques produits par le dispositif, qui peuvent être constitués simplement par une électrode 3 dite de masse, reliée au potentiel de référence du dispositif, recouvrant la surface du substrat 1 opposée à celle qui porte les transducteurs, et une électrode 4 dite de signal, continue, placée sur la surface du substrat 2 qui est opposée à la surface d'interaction.

L'image I est projetée sur la face du substrat semiconducteur 2 qui est en regard de la surface d'interaction, soit à travers le semiconducteur, l'électrode 4 devant alors être semitransparente soit comme représenté sur la figure à travers le substrat piézoélectrique 1, l'electrode 3 étant semitransparente.

Par ailleurs, différentes variantes, non représentées, sont possibles pour la réalisation des substrats semiconducteur et piézoélectrique: il est possible de confondre les deux milieux en un seul substrat, en sulfure de cadmium (Cd S) ou arséniure de gallium (As Ga) par exemple, ou encore de réaliser le milieu piézoélectrique par une couche mince, c'est-à-dire dont l'épaisseur est de l'ordre d'une fraction de la longueur d'onde élastique, déposée sur une plaquette de matériau semiconducteur.

En fonctionnement, on applique aux transducteurs $T_1$ à $T_4$ respectivement quatre signaux électriques de la forme:

3

—sur $T_1$:$S_1$=f(t) . $e^{j\omega_1 t}$
—sur $T_2$:$S_2$=h(t) . $e^{j\omega_2 t}$
—sur $T_3$:$S_3$=g(t) . $e^{j\omega_1 t}$
—sur $T_4$:$S_4$=r(t) . $e^{j\omega_2 t}$

c'est-à-dire que les signaux appliqués dans une même direction ont même fréquence: pulsation $\omega_1$ pour la direction Ox et pulsation $\omega_2$ pour la direction Oy.

Ainsi qu'il est connu, l'interaction de ces ondes produit des effets non linéaires, parmi lesquels on considère ceux du quatrième ordre, qui sont de la forme:

$$I(x,y) \times f(t - \frac{x}{v_x}) . g(t + \frac{x}{v_x}) . \exp\{j(\omega_1 t - k_1 x)\} + C.C.$$
$$. \exp\{j(\omega_1 t - k_1 x)\} + C.C.$$

$$\times h(t - \frac{y}{v_y}) . r(t + \frac{v}{v_y}) . \exp\{j(\omega_2 t - k_2 y)\} + C.C.$$
$$. \exp\{j(\omega_2 t + k_2 y)\} + C.C.$$

où: $v_x$ est la vitesse de propagation des ondes élastiques sur le substrat 1 dans la direction Ox, $v_y$ est la même vitesse dans la direction Oy, et C.C. est l'abréviation de fonction complexe conjuguée.

En développant l'expression précédente, on constate qu'il apparaît un terme de pulsation $2(\omega_1 + \omega_2)$ et de nombre d'onde nul:

$$I(x,y) . f(t - \frac{x}{v_x}) . g(t + \frac{x}{v_x}) . h(t - \frac{y}{v_y}) . r(t + \frac{y}{v_y}) . e^{2j(\omega_2 \pm \omega_1)t}$$

C'est ce terme qui est utilisé dans la présente invention, du fait qu'il ne présente pas de modulation spatiale (nombre d'onde résultant nul), ce qui permet de recueillir le signal correspondant entre les deux électrodes 3 et 4; cette dernière, n'ayant pas à être adaptée spatialement, peut donc se présenter sous la forme d'une électrode unique et continue. Un filtre de sortie centré sur la fréquence

$$\frac{\omega_1 + \omega_2}{\pi}$$

permet d'isoler le signal utile. Il est bien entendu nécessaire que $\omega_1$ et $\omega_2$ soient choisis de telle sorte que la pulsation $2(\omega_1 + \omega_2)$ soit différente des pulsations des autres termes fournis par l'interaction.

Le signal de sortie correspondant à toute la zone d'interaction ABCD s'écrit:

$$(1) \quad P(t) = e^{2j(\omega_1 + \omega_2)t} . \iint_{ABCD} I(x,y) . f(t - \frac{x}{v_x}) . g(t + \frac{x}{v_x}) . h(t - \frac{y}{v_y}) . r(t + \frac{y}{v_y}) . dx . dy$$

Selon la forme choisie pour les fonctions f(t), g(t), h(t) et r(t), le signal P peut représenter soit la lecture directe, point par point, de l'image I, soit sa transformée de Fourier, soit encore sa transformée de Fresnel.

Dans un mode de mise en oeuvre du dispositif selon l'invention, on applique des signaux longs sur chacun des transducteurs afin d'obtenir une transformation de Fourier de l'image optique. On entend par signal long un signal dont la durée est au moins égale au temps de balayage de la surface d'interaction par l'onde élastique qu'il engendre.

A cet effet, on utilise les signaux suivants:

—sur $T_1$:f(t)=exp $\{j\delta\omega_1 t\}$, $\delta\omega_1$ étant un pas de pulsation voisin de zéro, d'où $S_1$ $S_1$=exp $\{j\delta\omega_1 t\}$ . exp $\{j\omega_1 t\}$
—sur $T_2$:h(t)=1, d'où $S_2$=exp $\{j\omega_2 t\}$
—sur $T_3$:g(t)=1, d'où $S_3$=exp $\{j\omega_1 t\}$
—sur $T_4$:r(t)=exp $\{j . \delta\omega_2 . t\}$, $\delta\omega_2$ étant un autre pas de pulsation voisin de zéro, d'oú $S_4$=exp $\{j\delta\omega_2 t\}$ . exp $\{\omega_2 t\}$

En reportant ces valeurs dans l'expression (1) du signal de sortie, on obtient P(t) proportionnel à:

$$^{2j(\omega_1 + \omega_2)t} . \iint_{ABCD} I(x,y) . \exp\{-j(\frac{\delta\omega_1}{v_x} x - \frac{\delta\omega_2}{v_y} y)\} . dx . dy$$

**0 009 436**

Si on désigne par $K_x$ la quantité

$$\frac{\delta\omega_1}{v_x},$$

et $K_y$ la quantité

$$\frac{\delta\omega_2}{v_y},$$

on voit que la quantité sous l'intégrale est un "point", c'est-à-dire une valeur ou une amplitude, selon la terminologie adoptée ci-après, de la transformée de Fourier bidimensionnelle:

$$J(k_x,K_y)=\iint I(x,y) \cdot \exp\{-j(K_x x - K_y \cdot y)\} \cdot dx \cdot dy$$

de l'image $I(x,y)$. On a donc $P(t)$ proportionnel à:

$$e^{2j(\omega_1+\omega_2)t} \cdot J(K_x,K_y)$$

On obtient ainsi, disponible sur l'électrode de signal 4, un signal représentant un point de la Transformée de Fourier bidimensionnelle de l'image. Pour obtenir un autre point, il suffit de recommencer cette opération de lecture avec des valeurs légèrement différentes pour les pulsations $\delta\omega_1$ et $\delta\omega_2$. Par ailleurs, le signal électrique disponible sur l'électrode 4 ne représente l'information que lorsque les ondes élastiques recouvrent toute la zone d'interaction:il ne doit alors bien entendu être prélevé qu'à ce moment là et il apparaît en outre ici un inconvénient de ce mode de lecture: pour traiter un autre point de la transformée de Fourier de l'image, il faut attendre que les ondes de pulsation $\delta\omega_1$ et $\delta\omega_2$ aient disparu de la surface d'interaction et que de nouvelles ondes de pulsation $\delta\omega_1'$ et $\delta\omega_2'$ différentes occupent toute cette surface, ce qui est égal au temps de parcours (T) de toute la surface d'interaction par une onde élastique.

Pour pallier ce défaut, un deuxième mode de mise en oeuvre du dispositif selon l'invention prévoit d'appliquer à chacun des transducteurs des signaux longs qu'on a préalablement modulés linéairement (avec le temps) en fréquence, également appelés rampes de fréquence, de la forme:

$$\text{—sur } T_1 : f(t) = e^{j\alpha_1 t^2}, \text{ d'où } S_1 = e^{j\alpha_1 t^2} \cdot e^{j\omega_1 t}$$

$$\text{—sur } T_2 : h(t) = e^{j\alpha_2(t-\theta)^2}, \text{ d'où } S_2 = e^{j\alpha_2(t-\theta)^2} \cdot e^{j\omega_2 t}$$

$$\text{—sur } T_3 : g(t) = e^{-j\alpha'_1 t^2}, \text{ d'où } S_3 = e^{-j\alpha'_1 t^2} \cdot e^{j\omega_1 t}$$

$$\text{—sur } T_4 : r(t) = e^{-j\alpha'_2(t-\theta)^2}, \text{ d'où } S_4 = e^{-j\alpha'_2(t-\theta)^2} \cdot e^{j\omega_2 t}$$

$\alpha_1$, $\alpha'_1$, $\alpha_2$ et $\alpha'_2$ étant des coefficients de proportionnalité.

Si on choisit $\alpha_1=\alpha'_1$ et $\alpha_2=\alpha'_2$, en reportant dans l'equation (1), on obtient:

$$P(t)=e^{2j(\omega_1+\omega_2)t} \cdot \iint_{ABCD} I(x,y) \cdot \exp\left\{-4j\left(\frac{\alpha_1 t}{v_x}x+\frac{\alpha_2(t-\theta)}{v_y}y\right)\right\} \cdot dx \cdot dy$$

Si on désigne par $K_1$ la quantité

$$\frac{4\alpha_1 t}{v_x}$$

et par $K_2$ la quantité

$$\frac{4\alpha_2}{v_y}(t-\theta),$$

on voit que l'expression sous l'intégrale est la transformée de Fourier bidimensionnelle de l'image $I$:

$$J(K_1, K_2)=\iint_{ABCD} I(x,y) \cdot e^{-(K_1 x+K_2 y)}dx \cdot dy \text{ d,où } P(t)=e^{2j(\omega_1+\omega_2)t} \cdot J\left(\frac{4\alpha_1 t}{v_x}x, \frac{4\alpha_2(t-\theta)}{v_y}y\right)$$

5

**0 009 436**

On obtient ici, dans l'espace transformée de Fourier, un balayage selon une ligne à une vitesse liée à $\alpha_1$ et $\alpha_2$; une trame de N lignes parallèles est obtenue en opérant N balayages successifs, avec N valeurs différentes du retard $\theta$.

Par rapport au premier mode de mise en oeuvre, la rapidité de lecture est grandement accrue. En effet, il n'est plus nécessaire d'attendre le temps T mentionné plus haut pour lire un deuxième point de la transformée de Fourier: un temps 1/B, où B est la bande passante du système, est ici suffisant; cela veut dire que la lecture est B.T fois plus rapide, BT étant par ailleurs égal au nombre de points indépendants résolvables d'une ligne de l'image.

Un autre avantage de ce deuxième mode de mise en oeuvre tient au fait que la pente de la ligne de balayage dépend des coefficients $\alpha_1$ et $\alpha_2$, et plus précisément du rapport $\alpha_1/\alpha_2$. Il est donc possible de réaliser électroniquement une rotation quelconque de l'image par le choix du rapport $\alpha_1/\alpha_2$.

Lorsqu'on ne désire pas faire subir de rotation à l'image, on choisit $\alpha_1$ assez élevé et $\alpha_2$ faible afin que les fréquences des signaux $S_2$ et $S_4$, qui sont fonction de $\alpha_2$, puissent être considérées comme constantes pendant le temps de balayage d'une ligne.

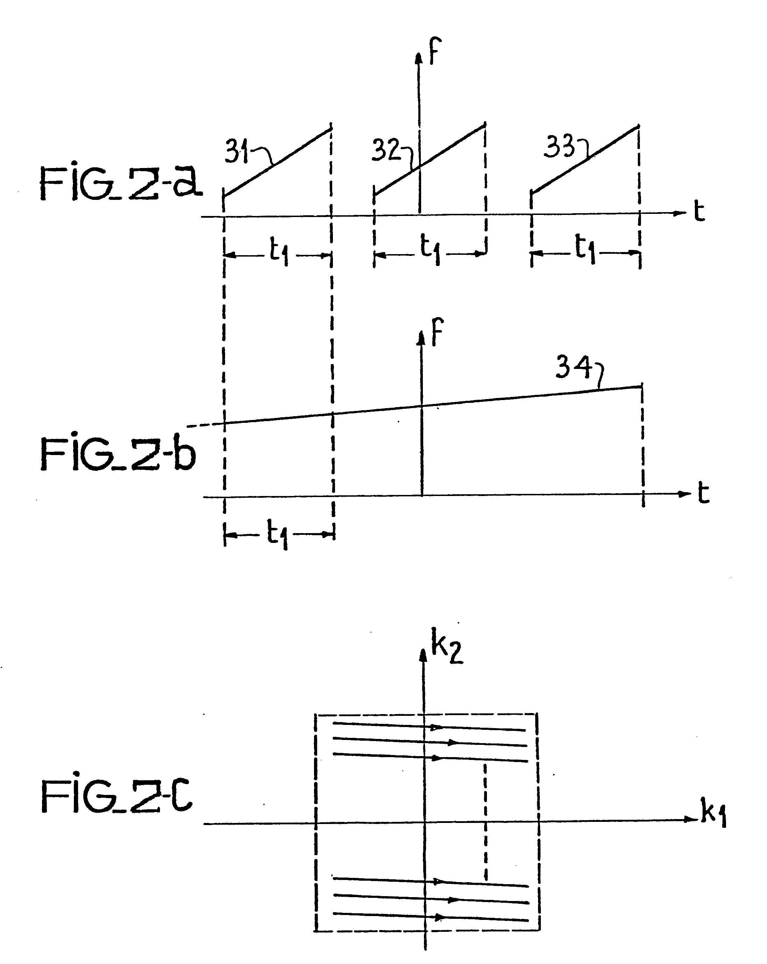

Sur la figure 2, a et b, on donne un exemple de la variation de la fréquence des signaux appliqués en fonction du temps.

Sur le diagramme (a), on a représenté à titre d'exemple trois segments 31, 32 et 33, de même pente $\alpha_1$ et de même durée $t_1$, qui illustrent la variation de la fréquence dans le temps des signaux $S_1$ et $S_3$ se propageant selon Ox. La durée $t_1$ représente le temps de balayage d'une ligne.

Le diagramme (b) représente ce que peut être l'évolution de la fréquence dans le temps des signaux $S_2$ et $S_4$ qui se propagent selon Oy. Il s'agit par exemple d'une droite 34, de pente $\alpha_2$ suffisamment faible par rapport à $\alpha_1$ pour que la fréquence puisse être considérée comme constante pendant le temps $t_1$. La longueur de la droite 34 représente le temps de balayage d'une trame de N lignes parallèles.

Le diagramme (c) représente la trame de balayage obtenue avec les valeurs de $\alpha_1$ et $\alpha_2$ indiquées plus haut, dans l'espace transformée de Fourier ($K_1$, $K_2$): il s'agit de N lignes parallèles entre elles, légèrement inclinées par rapport à l'axe $K_1$.

Le signal de sortie est donc analogue au signal vidéo d'une caméra de télévision classique, cependant l'information qui y est contenue est celle de la transformée de Fourier de l'image.

On a supposé ci-dessus que $\alpha_1 = \alpha'_1$ et $\alpha_2 = \alpha'_2$. Si ces considérations ne sont plus vérifiées, mais qu'il existe entre ces paramètres, la relation:

$$\frac{\alpha_1 - \alpha'_1}{v_x^2} = \frac{\alpha_2 - \alpha'_2}{v_y^2} = \frac{A}{v^2}$$

on obtient alors de façon analogue une transformée de Fresnel de l'image.

On a ainsi réalisé un dispositif simple, notamment au niveau du capteur du signal de sortie, utilisant l'interaction de quatre ondes élastiques avec seulement deux directions distinctes, permettant d'obtenir les transformées d'une image optique et, dans un mode préféré, en lecture rapide.

Bien entendu, l'invention n'est pas limitée aux modes de réalisation décrits c-dessus. C'est ainsi par exemple que les deux axes Ox et Oy ne sont pas nécessairement orthogonaux. De même peuvent être appliquées à la présente invention différentes méthodes connues pour améliorer la sensibilité des dispositifs acoustoélectriques de lecture d'images optiques, telles que celle qui consiste à placer des diodes sur la surface du substrat piézoélectrique qui est en regard de la surface d'interaction, et qui est notamment décrite dans la demande de brevet No° 75-27926 (N° de publication 2 324 061) au nom de Thomson-CSF, ou encore celle qui consiste à réaliser les opérations de lecture en deux phases, et qui est décrite dans la demande de brevet français N° 76-13001 (N° de publication 2 350 020) au nom de Thomson-CSF. Enfin, différentes variantes sont possibles, telle que l'émission de trois ondes élastique seulement, avec l'application simultanée d'un signal à la pulsation $2(\omega_1 + \omega_2)$ sur l'électrode de signal 4, le signal de sortie étant alors contenu dans un quatrième onde élastique, créée par l'interaction.

**Revendications**

1. Dispositif acousto-électrique de traitement d'une image optique à deux dimensions, comportant un milieu piézoélectrique (1) portant des transducteurs électromécaniques ($T_1$, $T_2$, $T_3$, $T_4$), susceptibles de transformer un signal électrique en ondes élastiques se propageant à la surface du milieu piézoélectrique et réciproquement, un milieu photosensible (2), recevant l'image optique (I) selon une surface (ABCD) dite surface d'interaction, ce milieu transformant les photons constituant l'image en charges électriques, des électrodes continues (3, 4) assurant la génération ou la réception d'une onde électromagnétique à travers un milieu électriquement non linéaire (2), dans lequel l'amplitude des interactions non linéaires produites par les ondes élastiques se propageant à la surface du milieu piézoélectrique dépend de la concentration des charges électriques, ces interactions ainsi modulées fournissant le signal de sortie du dispositif, le milieu non linéaire étant couplé électriquement au milieu photosensible; ce dispositif étant caractérisé par le fait que le milieu piézoélectrique porte quatre

6

transducteurs électromécaniques disposés deux à deux en vis-à-vis, susceptibles d'émettre des ondes ($S_1$—$S_4$) dans seulement deux directions (OX, Oy) distinctes et avec des vecteurs d'ondes tels que le vecteur résultant de l'interaction non linéaire de trois des ondes soit égal et opposé au vecteur d'onde de la quatrième onde élastique; que les quatre ondes émises sont des ondes longues, dont la durée est au moins égale au temps de balayage de la surface d'interaction par une onde élastique, chacune des ondes étant sinusoïdale de la forme exp $\{j.\delta\omega_1.t\}$ . exp $\{j.\omega_1.t\}$ et exp $\{j.\omega_1.t\}$ dans l'une des directions et de la forme exp $\{j.\delta\omega_2.t\}$ . exp $\{j.\omega_2.t\}$ et exp $\{j.\omega_2.t\}$ dans l'autre direction, l'interaction de ces ondes fournissant un point de la transformée de Fourier bidimensionnelle de l'image, les autres points de la transformée étant fournis par la variation des pulsations $\delta\omega_1$ et $\delta\omega_2$.

2. Dispositif acousto-électrique de traitement d'une image optique à deux dimensions, comportant un milieu piézoélectrique (1) portant des transducteurs électromécaniques ($T_1$, $T_2$, $T_3$, $T_4$), susceptibles de transformer un signal électrique en ondes élastiques se propageant à la surface du milieu piézoélectrique et réciproquement, un milieu photosensible (2), recevant l'image optique (I) selon une surface (ABCD) dite surface d'interaction, ce milieu transformant les photons constituant l'image en charges électriques, des électrodes continues assurant la génération ou la réception d'une onde électromagnétique à travers un milieu électriquement non linéaire (2), dans lequel l'amplitude des interactions non linéaires produites par les ondes élastiques se propageant à la surface du milieu piézoélectrique dépend de la concentration des charges électriques, ces interactions ainsi modulées fournissant le signal de sortie du dispositif, le milieu non linéaire étant couplé électriquement au milieu photosensible; ce dispositif étant caractérisé par le fait que le milieu piézoélectrique porte quatre transducteurs électromécaniques disposés deux à deux en vis-à-vis, susceptibles d'émettre des ondes ($S_1$—$S_4$) dans seulement deux directions (Ox, Oy) distinctes et avec des vecteurs d'ondes tels que le vecteur résultant de l'interaction non linéaire de trois des ondes soit égal et opposé au vecteur d'onde de la quatrième onde élastique; que les quatre ondes émises sont des ondes longues, dont la durée est au moins égale au temps de balayage de la surface d'interaction par une onde élastique, chacune des ondes étant sinusoïdale de la forme $e^{j\alpha_1 t^2} . e^{j\omega_1 t}$ et $e^{-j\alpha'_1 t^2} . e^{j\omega_1 t}$ pour l'une des directions (Ox) et de la forme $e^{j\alpha_2(t-\theta)^2} . e^{j\omega_2 t}$ et $e^{-j\alpha'_2(t-\theta)^2} . e^{j\omega_2 t}$ pour l'autre direction, $\alpha_1$, $\alpha'_1$, $\alpha_2$ et $\alpha'_2$ étant des coefficients de proportionalité et $\theta$ un retard, l'interaction de ces ondes fournissant une ligne d'une transformée bidimensionnelle de l'image, les autres lignes de la transformée étant fournies par la variation du retard ($\theta$) relatif des ondes émises dans la seconde direction (Oy).

3. Dispositif selon la revendication 2, caractérisé par le fait que les pentes $\alpha_1$ et $\alpha'_1$ sont égales et que les pentes $\alpha_2$ et $\alpha'_2$ sont égales, la transformée obtenue étant une transformée de Fourier.

4. Dispositif selon la revendication 2, caractérisé par le fait que les pentes $\alpha_1$, $\alpha_2$, $\alpha'_1$ et $\alpha'_2$ sont reliées par la relation:

$$\frac{\alpha_1-\alpha'_1}{v_y^2} = \frac{\alpha_2-\alpha'_2}{v_y^2}$$

où $v_x$ et $v_y$ sont les vitesses respectives des ondes élastiques selon les deux directions (Ox, Oy), la transformée obtenue étant une transformée de Fresnel.

5. Dispositif selon l'une des revendications précédentes, caractérisé par le fait que les deux directions distinctes (Ox, Oy) sont normales entre elles et que les ondes émises dans une même direction ont même fréquence.

6. Dispositif selon l'une des revendications précédentes, caractérisé par le fait que chacun des transducteurs ($T_1$—$T_4$) émet une onde élastique ($S_1$—$S_4$) et que le signal (P) résultant de l'interaction des quatre ondes élastiques est un signal spatialement uniforme, constituant le signal de sortie du dispositif et prélevé à l'aide des électrodes continues (3, 4).

7. Dispositif selon l'une des revendications précédentes, caractérisé par le fait que le milieu non linéaire et le milieu photosensible sont confondus en un même matériau.

8. Dispositif selon les revendications 6 et 7, caractérisé par le fait que le milieu piézoélectrique est constitué par une première plaquette (1) et que le milieu non linéaire et photosensible est constitué par une seconde plaquette (2) réalisée en un matériau semiconducteur, les deux plaquettes étant séparées par une couche d'air, les ondes élastiques se propageant sur une première face de la plaquette piézoélectrique (1), la surface d'interaction étant portée par la face de la seconde plaquette (2) qui est en vis-à-vis de la première face de la plaquette piézoélectrique (1), les électrodes continues (3, 4) étant placées respectivement sur les faces extérieures des deux plaquettes.

## Patentansprüche

1. Elektro-akustische Vorrichtung zur Behandlung eines zweidimensionalen optischen Bildes, mit einem piezoelektrischen Medium (1), das elektromechanische Transduktoren ($T_1$, $T_2$, $T_3$, $T_4$) trägt, vermittels welcher ein elektrisches signal in elastische Wellen unwandelbar ist, die sich an der Oberfläche des piezoelektrischen Mediums fortpflanzen, und umgekehrt, sowie mit einem lichtempfindlichen Medium (2), das im Rahmen einer "Wechselwirkungsfläche" genannten Oberfläche (ABCD) das optische Bild (I) empfängt und die das Bild darstellenden Photonen in elektrische Ladungen umwandelt, wobei durchgehende Elektroden (3, 4) eine ein elektrisch nicht lineares Medium (2) durchquerende elektromagnetische Welle erzeugen oder empfangen, in welchem Medium die Amplitude der durch die sich an der Oberfläche des piezoelektrischen Mediums ausbreitenden Wellen hervorgerufenen, nicht linearen Wechselwirkungen von der Konzentration der elektrischen Ladungen abhängig ist, wobei die auf diese Weise modulierten Wechselwirkungen das Ausgangssignal der Vorrichtung liefern, und wobei das nicht lineare Medium mit dem lichtempfindlichen Medium elektrisch gekoppelt ist, dadurch gekennzeichnet, dass das piezoelektrische Medium vier paarweise einander gegenüberliegende elektromechanische Transduktoren trägt, die Wellen $(S_1—S_4)$ in nur zwei verschiedenen Richtungen (Ox, Oy) mit derart gestalteten Wellenvektoren abstrahlen können, dass der sich aus der nicht linearen Wechselwirkung drier Wellen ergebende Vektor dem Wellenvektor der vierten elastischen Welle gleich und entgegengesetzt ist; und ferner dadurch, dass die vier abgestrahlten Wellen Langwellen sind, deren Dauer wenigstens gleich der Dauer des Abtastens der Wechselwirkungsfläche durch eine elastische Welle ist, wobei jede dieser Wellen eine sinusförmige Welle ist, die die Form $\exp . |j . \delta\omega_1 . t| . \exp |j . \omega_1 . t|$ und $\exp |j . \omega_1 . t|$ in der einen Richtung und die Form $\exp |j . \delta\omega_2 . t| . \exp |j . \omega_2 . t|$ und $\exp |j . \omega_2 . t|$ in der anderen Richtung aufweist, un wobei die Wechselwirkung dieser Wellen einen Punkt der zweidimensionellen Fourier-Transformation des Bildes liefert, währen die anderen Punkte der Transformation durch die Schwankungen der Impulse $\delta\omega_1$ und $\delta\omega_2$ bestimmt werden.

2. Elektro-akustische Vorrichtung zur Behandlung eines zweidimensionalen optischen Bildes, mit einem piezoelektrischen Medium (1), das elektromechanische Transduktoren $(T_1, T_2, T_3, T_4)$ trägt, vermittels welcher ein elektrisches Signal in elastische Wellen unwandelbar ist, die sich an der Oberfläche des piezoelektrischen Mediums fortpflanzen, und umgekehrt, sowie mit einem lichtempfindlichen Medium (2), das in Rahmen einer "Wechselwirkungsfläche" genannten Oberfläche (ABCD) das optische Bild (I) empfängt und die das Bild darstellenden Photonen in elektrische Ladungen umwandelt, wobei durchgehende Elektroden (3, 4) eine ein elektrische nicht lineares Medium (2) durchquerende elektromagnetische Welle erzeugen oder empfangen, in welchem Medium die Amplitude der durch die sich an der Oberfläche des piezoelektrischen Mediums ausbreitenden Wellen hervorgerufenen, nicht linearen Wechselwirkungen von der Konzentration der elektrischen Ladungen abhängig ist, wobei die auf diese Weise modulierten Wechselwirkungen das Ausgangssignal der Vorrichtung liefern, und wobei das nicht lineare Medium mit dem lichtempfindlichen Medium elektrisch gekoppelt ist, dadurch gekennzeichnet, dass das piezoelektrische Medium vier paarweise einander gegenüberliegende elektromechanische Transduktoren trägt, die Wellen $(S_1—S_4)$ in nur zwei verschiedenen Richtungen (Ox, Oy) mit derart gestalteten Wellenvektoren abstrehlen können, das der sich aus der nicht linearen wechselwirkung drier Wellen ergehende Vektor dem Wellenvektor der vierten elastischen Welle gleich und entgegengesetzt ist; und ferner dadurch, das die vier abgestrahlten Wellen Langwellen sind, deren Dauer wenigstens gleich der Dauer des Abtastens der Wechselwirkungsfläche durch eine elastische Welle ist, wobei jede dieser Wellen eine sinusförmige Welle ist, die die Form $e^{j\alpha_1 t^2} . e^{j\omega_1 t}$ und $e^{-j\alpha'_1 t^2} . e^{j\omega_1 t}$ für die eine Richtung (Ox) und die Form $e^{j\alpha_2(t-\theta)^2} . e^{j\omega_2 t}$ und $e^{-j\alpha'_2(t-\theta)^2} . e^{j\omega_2 t}$ für die andere Richtung aufweist, und wobei $\alpha_1, \alpha'_1, \alpha_2$ und $\alpha'_2$ Proportionalitätskoeffizienten und $\theta$ eine Verzögerung darstellen, während die Wechselwirkung dieser Wellen eine Linie einer zweidimensionalen Transformation des Bildes liefert, wohingegen die anderen Linien der Transformation durch die Schwankungen der relativen Verzögerung $(\theta)$ der in der zweiten Richtung (Oy) abgestrahlten Wellen bestimmt werden.

3. Vorrichtung nach Anspruch 2, dadurch gekennzeichnet, dass die Neigungen $\alpha_1$ und $\alpha'_1$ gleich sind, und dass die Neigungen $\alpha_2$ und $\alpha'_2$ gleich sind, wobei die resultierende Transformation eine Fourier-Transformation ist.

4. Vorrichtung nach Anspruch 2, dadurch gekennzeichnet, dass die Neigungen $\alpha_1, \alpha_2, \alpha'_1$ und $\alpha'_2$ der Gleichung

$$\frac{\alpha_1-\alpha'_1}{v_x^2} = \frac{\alpha_2-\alpha'_2}{v_y^2}$$

entsprechen, wobei $v_x$ und $v_y$ den jeweiligen Geschwindigkeiten der elastischen Wellen in die beiden Richtungen (Ox, Oy) darstellen und die resultierende Transformation eine Fresnel-Transformation ist.

5. Vorrichtung nach einem der vorstehenden Ansprüche, dadurch gekennzeichnet, dass die beiden verschiedenen Richtung (Ox, Oy) senkrecht zueinander sind, und das die in gleicher Richtung abgestrahlten Wellen gleicher Frequenz sind.

6. Vorrichtung nach einen der vorstehenden Ansprüche, dadurch gekennzeichnet, dass jeder der Transduktoren $(T_1—T_4)$ eine elastische Welle $(S_1—S_4)$ abstrahlt, und dass das von der Welchselwirkung der vier elastischen Wellen herrührende Signal (P) ein räumlich einheitliches Signal ist, welches das Ausgangssignal der Vorrichtung bildet und vermittels der durchgehenden Elektroden (3, 4) abgenommen wird.

7. Vorrichtung nach einem der vorstehenden Ansprüche, dadurch gekennzeichnet, dass das nicht lineare Medium und das lichtempfindliche Medium aus einem und demselben Material gebildet sind.

8. Vorrichtung nach den Ansprüchen 6 und 7, dadurch gekennzeichnet, dass das piezoelektrische Medium aus einem ersten Plättchen (1) besteht, währen das nicht lineare lichtempfindliche Medium aus einem zweiten Plättchen (2) aus einem Halbleitermaterial besteht, wobei die beiden Plättchen durch eine Luftschicht voneinander getrennt sind, wobei die elastischen Wellen sich an einer ersten Oberfläche des piezoelektrischen Plättchens (1) ausbreiten, wobei die Wechselwirkungsfläche durch diejenige Oberfläche des zweiten Plättchens (2) getragen wird, die der ersten Oberfläche des piezoelektrischen Plättchens (1) gegenüberliegt, und wobei die durchgehenden Elektroden (3, 4) jeweils auf den äusseren Oberflächen der beiden Plättchen angeordnet sind.

**Claims**

1. An electro-acoustic device for processing a bidimensionel optical image, comprising a piezoelectric medium (1) carrying electro-mechanical transducers ($T_1$, $T_2$, $T_3$, $T_4$) adapted to convert an electrical signal into elastic waves propagated at the surface of the piezoelectric medium, and vice versa, a light-sensitive medium (2) receiving the optical image (I) within a surface (ABCD) called "interaction surface", said medium converting the photons constituting the image into electric charges, continuous electrodes (3, 4) generating or receiving an electromagnetic wave through an electrically non-linear medium (2), wherein the amplitude of the non-linear interactions produced by the elastic waves propagated at the surface of the piezoelectric medium is a function of the concentration of the electric charges, these thus modulated interactions providing the output signal of the device, said non-linear medium being electrically coupled with the light-sensitive medium; said device being characterized in that the piezoelectric medium carries four electromechanical transducers disposed two-by-two in a mutually opposed relationship and adapted to emit waves ($S_1$—$S_4$) in only two different directions (Ox, Oy) with wave vectors such that the vector resulting from the non-linear interaction of three waves is equal and opposed to the wave vector of the fourth elastic wave; and in that the four emitted waves are long waves the duration of which is at least equal to the time of the scanning of the interaction surface by an elastic wave, each one of said waves being of sinusoidal shape and corresponding to the form $\exp |j \cdot \delta\omega_1 \cdot t| \cdot \exp |j \cdot \omega_1 \cdot t|$ et $\exp |j \cdot \omega_1 \cdot t|$ in one of the directions, and the form $\exp |j \cdot \delta\omega_2 \cdot t| \cdot \exp |j \cdot \omega_2 \cdot t|$ and $\exp |j \cdot \omega_2 \cdot t|$ in the other direction, the interaction of these waves providing one point of the bidimensional Fourier transformation of the image, whereas the other points of the transformation of the image are provided by the variation of the pulses $\delta\omega_1$ and $\delta\omega_2$.

2. An electro-acoustic device for processing a bidimensional optical image, comprising a piezoelectric medium (1) carrying electromechanical transducers ($T_1$, $T_2$, $T_3$, $T_4$) adapted to convert an electric signal into elastic waves propagated at the surface of the piezoelectric medium, and vice versa, a light-sensitive medium (2) receiving the optical image within a surface (ABCD) called "interaction surface", said medium converting the photons constituting the image into electric charges, continuous electrodes (3, 4) generating or receiving an electromagnetic wave through an electrically non-linear medium (2), wherein the amplitude of the non-linear interactions produced by the elastic waves propagated at the surface of the piezoelectric medium is a function of the concentration of the electric charges, these thus modulated interactions providing the output signal of the device, said non-linear medium being electrically coupled with the light-sensitive medium; said device being characterized in that the piezoelectric medium carries four electromechanical transducers disposed two-by-two in a mutually opposed relationship and adapted to emit waves ($S_1$—$S_4$) in only two different directions (Ox, Oy) with wave vectors such that the vector resulting from three waves is equal and opposed to the wave vector of the fourth elastic wave; and in that the four emitted waves are long waves the duration of which is at least equal to the time of the scanning the interaction surface by an elastic wave, each one of said waves being of sinusoidal shape and corresponding to the form $e^{j\alpha_1 t^2} \cdot e^{j\omega_1 t}$ and $e^{-j\alpha'_1 t^2} \cdot e^{j\omega_1 t}$ for one of the directions (Ox), and the form $e^{j\alpha_2(t-\theta)^2} \cdot e^{j\omega_2 t}$ and $c^{-j\alpha'_2(t-\theta)^2} \cdot e^{j\omega_2 t}$ for the other direction, $\alpha_1$, $\alpha'_1$, $\alpha_2$ and $\alpha'_2$ being proportionality coefficients, and $\theta$ being a time delay, the interaction of these waves providing one line of a bidimensional transformation of the image, while the other lines of the transformation are provided by the variation of the relative time delay ($\theta$) of the waves emitted in the second direction (Oy).

3. A device according to claim 2, characterized in that the slopes $\alpha_1$ and $\alpha'_1$ are equal and the slopes $\alpha_2$ and $\alpha'_2$ are equal, the resulting transformation being a Fourier transformation.

4. A device according to claim 2, characterized in that the slopes $\alpha_1$, $\alpha_2$, $\alpha'_1$ and $\alpha'_2$ correspond to the relation:

$$\frac{\alpha_1 - \alpha'_1}{v_x^2} = \frac{\alpha_2 - \alpha'_2}{v_y^2}$$

wherein $v_x$ and $v_y$ are the respective velocities of the elastic waves propagated in said two directions (Ox, Oy), the resulting transformation being a Fresnel transformation.

5. A device according to any one of the preceding claims, characterized in that the two different directions (Ox, Oy) are perpendicular to each other, and in that the waves emitted in a common direction have the same frequency.

6. A device according to any of the preceding claims, characterized in that each one of the transducers ($T_1$—$T_4$) emits one elastic wave ($S_1$—$S_4$), and that the signal (P) resulting from the interaction of the four elastic waves is a spatially uniform signal constituting the output signal of the device and detected by means of the continuous electrodes (3, 4).

7. A device according to any one of the preceding claims, characterized in that the non-linear medium and the light-sensitive medium are formed of one identical material.

8. A device according to claims 6 and 7, characterized in that the piezoelectric material is constituted by a first plate (1), while the non-linear medium is constituted by a second plate (2) made of a semiconductor material, said two plates being separated by an air layer, said elastic waves being propagated on a first face of the piezoelectric plate (1), the interaction surface being carried by that face of the second plate (2), which is disposed in front of the first face of the piezoelectric plate (1), and the continuous electrodes (3, 4) being disposed respectively on the external faces of the two plates.

FIG_1

FiG_2-a

FiG_2-b

FiG_2-c